# EUROPÄISCHE PATENTANMELDUNG

(11) **EP 0 601 216 A1**
(43) Veröffentlichungstag der Anmeldung: **15.06.1994**
(21) Anmeldenummer: 92119491.6
(22) Anmeldetag: 13.11.1992
(51) Int. Cl.: H04L 12/26, H04L 12/40, H04L 25/38

(54) **Serielles Nachrichtenübertragungsverfahren**

(71) Anmelder: SIEMENS AKTIENGESELLSCHAFT, D-80333 München (DE)
(72) Erfinder: Kremer, Karl-Theo, Dipl.-Ing., W-8555 Adelsdorf (DE)

(57) **Zusammenfassung**

Bei seriellen Bussen, z. B. Feldbussen, erfolgt die Nachrichtenübertragung in Form von Telegrammen, die aus einzelnen Bytes bestehen, wobei jedem Byte ein Startbit vorangestellt sowie ein Parity- und ein Stoppbit nachgestellt sind. Zur Erhöhung der Datensicherheit wird vom Empfänger (5) überwacht, ob bei der Übertragung von Telegrammen zwischen zwei Bytes tatsächlich nur ein Stoppbit übertragen wird. Wird mehr als ein Stoppbit übertragen, so wird eine Meldung an eine dem Empfänger (5) übergeordnete Einheit (2) übermittelt.

## Beschreibung

Die vorliegende Erfindung betrifft ein serielles Nachrichtenübertragungsverfahren nach dem Oberbegriff von Anspruch 1. Ein derartiges Verfahren wird beispielsweise bei seriellen Feldbussen, z.B. dem Profibus, angewendet. Beim Profibus erfolgt die Datenübertragung in einzelnen Telegrammen. Jedes Telegramm besteht aus einem Startbyte, einem Telegrammlängenbyte, Nutzdaten, einem Blockcheckbyte und einem Telegrammendebyte. Jedem übertragenen Byte ist ein Startbit vorangestellt sowie ein Parity- und ein Stoppbit nachgestellt. Das Startbit hat stets den Wert Null, das Stoppbit den Wert Eins. Das Stoppbit dient dabei als Blocktrennung zwischen jeweils zwei Nutzdatenblöcken, wobei jeder Nutzdatenblock aus einem Byte und einem Paritybit besteht.

Bei der seriellen Datenübertragung sind sowohl Sender als auch Empfänger üblicherweise sogenannte UARTs (Universal Asynchronous Receiver/Transmitter). Sowohl Sender als auch Empfänger werden üblicherweise mit einer Taktrate von z.B. 12 MHz getaktet, während die Datenübertragung mit einer erheblich geringeren Baudrate von z. B. 1,5 MBaud erfolgt. Ein Bit der Datenübertragung entspricht folglich stets mehreren Takten des Systemtaktes, im vorliegenden Fall 8 Takten.

Beim Profibus und den meisten anderen Feldbussen ist das Ruhepotential des Busses das logische Eins-Niveau. Sobald der Empfänger ein Absinken des Buspegels auf das Null-Niveau bemerkt, wird dies vom Empfänger als Beginn einer Datenübertragung interpretiert. Der Empfänger synchronisiert das Einlesen der elf Bit (Startbit, 1 Byte Daten, Paritybit, Stoppbit) daher mit der fallenden Flanke des Startbits. Nach Senden des Stoppbits durch den Sender befindet sich der Bus wieder auf seinem Ruhepotential.

Da sich der Empfänger beim Empfangen und Detektieren der nächsten fallenden Signalflanke stets neu synchronisiert, könnte die Sendepause zwischen zwei Nutzdatenblöcken im Prinzip bliebig lang sein. Die meisten Busprotokolle, darunter auch das Profibusprotokoll, schreiben jedoch vor, daß innerhalb eines Telegramms kontinuierlich gesendet werden muß, d. h., daß zwischen zwei Nutzdatenblöcken tatsächlich nur ein Stoppbit liegt. Nur so ist nämlich der hohe Hamming-Abstand von 4 gewährleistet, der es ermöglicht, Ein-Bit-Fehler, Zwei-Bit-Fehler und Drei-Bit-Fehler zu detektieren.

Bisher wurden daher alle Sender eines Bussystems darauf ausgelegt, stets die Daten unmittelbar nacheinander, d. h. mit nur einem Stoppbit dazwischen zu senden. Ob der Sender jedoch tatsächlich nur mit einem Stoppbit zwischen zwei Nutzdatenblöcken arbeitete, wurde nicht mehr kontrolliert. Es konnte folglich geschehen, daß, wenn der Sender von höherprioren Aufgaben unterbrochen wurde, unbemerkt fehlerhafte Telegramme, d. h. Telegramme mit mehreren Stoppbits zwischen zwei Nutzdatenblöcken, gesendet wurden.

Die Aufgabe der vorliegenden Erfindung besteht folglich darin, das Auftreten nicht vorschriftsgemäßer Blocktrennungen rechtzeitig vor der empfangsseitigen Auswertung des Telegramms und der empfangsseitigen Reaktion auf das Telegramm zu bemerken.

Die Aufgabe wird für das Verfahren durch das Kennzeichen des Anspruchs 1 bzw. für die Empfangsvorrichtung durch das Kennzeichen des Anspruchs 8 gelöst.

Weitere Vorteile und Einzelheiten ergeben sich aus der nachfolgenden Beschreibung eines Ausführungsbeispiels, anhand der Zeichnungen und aus den Unteransprüchen. Dabei zeigen:
FIG 1 ein Nachrichtenübertragungssystem;
FIG 2 ein Blockschaltbild des Sendeempfängers und
FIG 3 das Nachrichtenübertragungsverfahren.

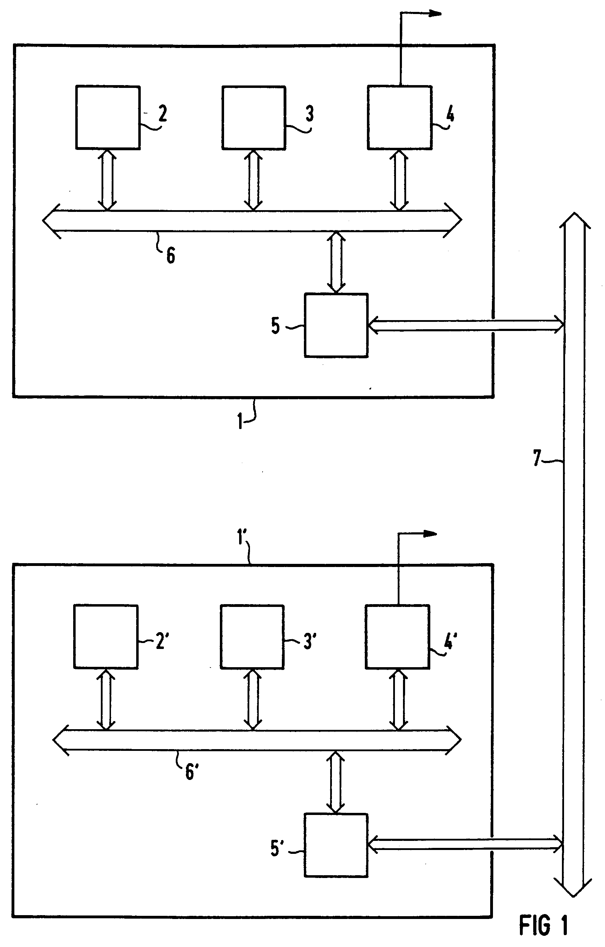

Gemäß FIG 1 bestehen die Zentraleinheiten 1, 1' speicherprogrammierbarer Steuerungen im wesentlichen aus Mikroprozessoren 2, 2', Speichern 3, 3' und ASICs 4, 4', 5, 5', die über Busse 6, 6' miteinander verbunden sind. Die ASICs 4, 4' sind Controller, die den Datenverkehr mit nicht dargestellten Peripherieeinheiten abwickeln. Die ASICs 5 sind Buscontroller und dienen dem Ankoppeln der Zentraleinheiten 1, 1' an einen Bus 7, hier einen Token Ring, z. B. einen Profibus.

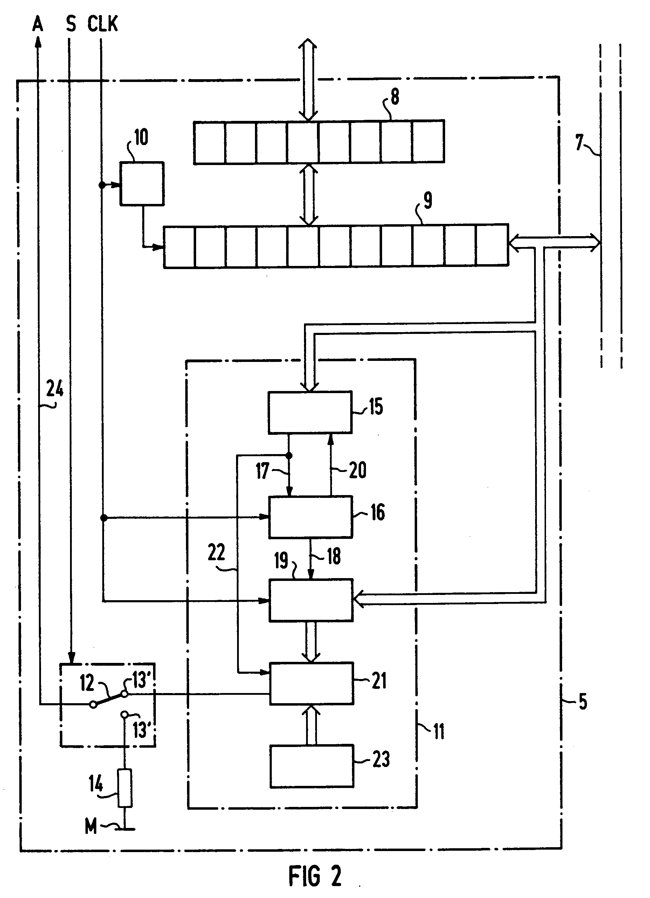

Gemäß FIG 2 ist das ASIC 5 als Sendeempfänger ausgebildet. Er weist ein Bufferregister 8 und ein Schieberegister 9 auf. Das Schieberegister 9 ist über einen Frequenzteiler 10 mit dem Systemtakt CLK verbunden. Mittels des Frequenzteilers 10 wird der Systemtakt CLK von z. B. 12 MHz derart heruntergeteilt, daß das Schieberegister 9 mit der erheblich niedrigeren Datenübertragungsrate des seriellen Busses 7 von z. B. 1, 5 MBaud betrieben wird.

Die Datenübertragungsrate kann den Zentraleinheiten 1, 1' beispielsweise fest vorgegeben und dadurch bekannt sein.

Alternativ ist es aber auch möglich, daß der Prozessor 2 dem Empfänger 5 zunächst die Datenübertragungsrate vorgibt, z. B. 1,5 MBaud. Der Emfänger 5 arbeitet dann mit dieser Datenübertragungsrate. Werden die Nachrichten mit einer anderen Datenübertragungsrate übermittelt als der, die dem Empfänger 5 vorgegeben ist, so treten selbstverständlich Empfangsfehler auf. Wenn laufend Telegramme nicht ordnungsgemäß empfangen werden, so wird dies als fehlerhafte Datenübertragungsrate interpretiert. Der Prozessor 2 ändert dann die Datenübertragungsrate, z. B. durch Halbieren der Datenübertragungsrate, solange, bis in den nunmehr empfangenen Nachrichten keine Fehler mehr auftreten. Bei diesem Verfahren muß dem Frequenzteiler 10 selbstverständlich die Teilungsrate vorgebbar sein.

Arbeitet das ASIC 5 als Sender, so wird jeweils 1 Byte Nutzdaten in das Bufferregister 8 eingespeichert, während das momentan zu sendende Byte aus dem Schieberegister 9 ausgelesen und über den Bus 7 gesendet wird. Nach dem Auslesen des Schieberegisters 9 wird das im Bufferregister 8 zwischengespeicherte Byte in das Schieberegister 9 übernommen und das Auslesen fortsetzt. In der Betriebsart "Senden" ist die Vergleicherschaltung 11 vorzugsweise deaktiviert. Auf besonders einfache Weise kann das Deaktivieren geschehen, wenn hierzu der Schalter 12 über den Kontakt 13 und den Widerstand 14 mit Masse M verbunden wird. Alternativ kann sich der Sender selbst überwachen.

Arbeitet das ASIC 5 als Empfänger, so wird jeweils ein Byte Nutzdaten incl. Start-, Parity- und Stoppbit in das Schieberegister 9 eingelesen, sodann im Bufferregister 8 zwischengespeichert und das Bufferregister 8 während des Einlesens der nächsten elf Bit in das Schieberegister 9 ausgelesen.

Auch beim Empfangen von Daten kann der Schalter 12 mit dem Kontakt 13 verbunden sein. In diesem Fall arbeitet das ASIC 5 ohne Blocktrennungsüberwachung. Ist der Schalter 12 dagegen aufgrund des Anlegens des Steuersignals S mit dem Kontakt 13' verbunden, so ist die Vergleicherschaltung 11 zugeschaltet. Die Blocktrennungsüberwachung ist aktiviert.

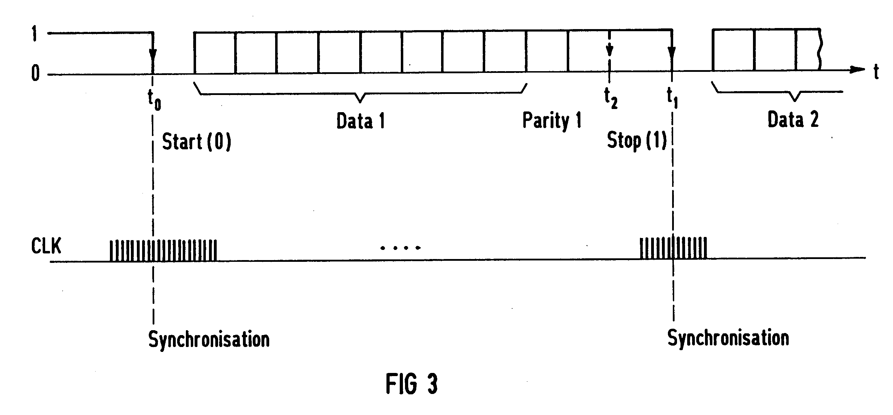

FIG 3 zeigt die über den Bus 7 empfangenen Signale sowie den Systemtakt CLK. Die Striche entsprechen dabei den fallenden Taktflanken des Systemtaktes CLK. Gemäß FIG 3 geht zum Zeitpunkt t₀ das Potential des Busses 7 von logisch-Eins auf logisch-Null. Dies wird vom ASIC 5 als Beginn des Startbits, das immer den Wert Null hat, interpretiert. Das ASIC 5 synchronisiert sich daraufhin mit dieser fallenden Signalflanke, d. h. es beginnt zu diesem Zeitpunkt t₀ mit dem Takten des Schieberegisters 9. Nach jedem Bit, d. h. im vorliegenden Fall nach jeweils 8 Takten des Systemtaktes CLK, wird das Schieberegister 9 um eine Stelle weitergeschoben. Nach dem Einlesen von 11 Bit, d. h. hier nach 88 Takten, wird das Schieberegister 9 nicht mehr weitergeschoben, bis erneut eine fallende Signalflanke z.B. zum Zeitpunkt t₁ detektiert wird. Dort erfolgt eine neue Einsynchronisation des ASICs 5.

Wie obenstehend erwähnt, erfolgt das Einlesen der nächsten 11 Bit erst nach dem Detektieren der nächsten fallenden Signalflanke. Der Hamming-Abstand von 4, der beim Profibus erreicht wird, ist jedoch nur dann gewährleistet, wenn die Blocktrennung zwischen dem Nutzdatenblock 1, der aus dem Datenblock Data 1 und dem Parity-bit Parity 1 besteht und dem korrespondierenden Nutzdatenblock 2 tatsächlich nur die Länge von 1 Bit aufweist. Das heißt, die zum Zeitpunkt t₁ auftretende fallende Signalflanke müßte bereits zum Zeitpunkt t₂ detektiert werden, wie in FIG 3 durch die gestrichelte Linie angedeutet ist.

Zur Überwachung des Ist-Zeitverhaltens der aus dem Stoppbit bestehenden Blocktrennung weist die Vergleicherschaltung 11 daher einen Auslöser 15 auf, der ein Triggersignal auslöst, wenn er die fallende Signalflanke eines Startbits, z. B. zum Zeitpunkt t₀ detektiert. Der Auslöser 15 sendet das Triggersignal über die Leitung 17 an den Zähler 16, der daraufhin seinen Zählerstand, beginnend bei Null, bei jedem Takt des Systemtaktes CLK um Eins erhöht. Wenn der Zähler 16 einen Zählerstand erreicht hat, der 10 eingelesenen Bits entspricht, im vorliegenden Fall also 80, sendet er über die Leitung 18 ein Auslösesignal an den Zähler 19. Der Zähler 19 beginnt daraufhin ebenfalls, seinen Zählerstand beginnend von Null mit jedem Takt des Systemtaktes CLK um Eins zu erhöhen.

Wenn der Zähler 16 einen Zählerstand "zwischen 10 und 11 Bit", hier also zwischen 80 und 88, z. B. von 84, erreicht hat, sendet er ein Bereitschaftssignal über die Leitung 20 an den Auslöser 15, der dadurch wieder auf die nächste fallende Signalflanke ein Triggersignal auslöst. Gleichzeitig löscht sich der Zähler 16.

Beim Auslösen des Auslösers 15 wird auch der Vergleicher 21 über die Leitung 22 aktiviert. Der Vergleicher 21 liest die Inhalte des Zählers 19 und des Speichers 23 aus und vergleicht sie miteinander. Differieren die Werte maximal um eine vorgebbare Schranke, z. B. zwei oder drei, so wird dies als Empfang genau eines Stoppbits gewertet. In diesem Fall erfolgt keine Meldung über die Alarmleitung 24. Andernfalls wird ein Alarm A über die Alarmleitung 23 an den in FIG 2 nicht dargestellten Prozessor 2 gemeldet, so daß der Prozessor 2 von der nicht ordnungsgemäßen Datenübertragung erfährt und dementsprechend reagieren kann. Die Reaktion des Prozessors 2 kann beispielsweise darin bestehen, daß er die empfangene Nachricht ignoriert und nicht auf sie antwortet. In diesem Fall wird nach Verstreichen einer gewissen Zeitspanne die sendende Einheit das Telegramm erneut übertragen. Alternativ ist es jedoch auch möglich, daß der Prozessor 2 aktiv eine Nachrichtenwiederholungsaufforderung an den Sender übermittelt.

## Patentansprüche

1. Serielles Nachrichtenübertragungsverfahren zum digitalen Übertragen von Nachrichten von einem Sender (5') an einen Empfänger (5) mit einer Datenübertragungsrate, wobei eine Nachricht aus mindestens zwei Nutzdatenblöcken besteht, die durch eine Blocktrennung mit einem Ist-Zeitverhalten voneinander getrennt sind, **dadurch gekennzeichnet,** daß das Ist-Zeitverhalten der vom Empfänger (5) empfangenen Blocktrennung vom Empfänger (5) mit einem Soll-Zeitverhalten verglichen wird und daß der Empfänger (5) beim Überschreiten einer maximal zulässigen Abweichung des Ist-Zeitverhaltens vom Soll-Zeitverhalten eine Meldung an eine dem Empfänger (5) übergeordnete Einheit (2), z.B. einen Prozessor (2), übermittelt.

2. Nachrichtenübertragungsverfahren nach Anspruch 1, **dadurch gekennzeichnet,** daß dem Empfänger (5) die Datenübertragungsrate vorbekannt ist.

3. Nachrichtenübertragungsverfahren nach Anspruch 1, **dadurch gekennzeichnet,** daß die übergeordnete Einheit (2) dem Empfänger (5) zunächst die Datenübertragungsrate vorgibt, mit dieser Datenübertragungsrate empfangene Nachrichten auf Fehler überprüft und beim Auftreten von Fehlern die Datenübertragungsrate solange ändert, bis in den mit der geänderten Datenübertragungsrate empfangenen Nachrichten keine Fehler mehr auftreten.

4. Nachrichtenübertragungsverfahren nach einem der obigen Ansprüche, **dadurch gekennzeichnet,** daß die Blocktrennung aus mindestens einem Bit besteht, dessen Zeitdauer überwacht wird.

5. Nachrichtenübertragungsverfahren nach Anspruch 4, **dadurch gekennzeichnet,** daß das Bit ein dem zuerst übertragenen Nachrichtenblock angehängtes Stoppbit ist.

6. Nachrichtenübertragungsverfahren nach einem der obigen Ansprüche, **dadurch gekennzeichnet,** daß beim Auftreten einer Abweichung des Ist-Zeitverhaltens vom Soll-Zeitverhalten eine Nachrichtenwiederholungsaufforderung an den Sender (5') übermittelt wird.

7. Nachrichtenübertragungsverfahren nach einem der obigen Ansprüche, **dadurch gekennzeichnet,** daß beim Auftreten einer Abweichung des Ist-Zeitverhaltens vom Soll-Zeitverhalten die empfangene Nachricht von der übergeordneten Einheit (2) ignoriert wird.

8. Empfänger (5), vorzugsweise kombinierter Sendeempfänger (5), zur Durchführung des Verfahrens nach einem der obigen Ansprüche, **dadurch gekennzeichnet,** daß er Vergleichsmittel (11) zum Vergleichen einer für das Ist-Zeitverhalten der Blocktrennung charakteristischen Ist-Taktzahl mit einer für das Soll-Zeitverhalten charakteristischen Soll-Taktzahl und Meldemittel (24) zum Melden des Überschreitens einer maximal zulässigen Abweichung der Ist-Taktzahl von der Soll-Taktzahl an eine übergeordnete Einheit (2), z. B. einen Prozessor (2), aufweist.

9. Empfänger nach Anspruch 8, **dadurch gekennzeichnet,** daß die Vergleichsmittel (11) abschaltbar sind.

10. Empfänger nach Anspruch 8 oder 9, **dadurch gekennzeichnet,** daß er in einen anwendungsspezifischen Baustein (5) integriert ist.

## Geänderte Patentansprüche

### Geänderte Patentansprüche gemäss Regel 86(2) EPÜ.

1. Serielles Nachrichtenübertragungsverfahren zum Übertragen von aus Bits bestehenden Nachrichten von einem Sender (5') an einen Empfänger (5),
- wobei die Nachrichten mit einer festen Datenübertragungsrate übertragen werden, so daß während einer bestimmten Zeit ein Bit übertragen wird,
- wobei eine Nachricht aus mindestens zwei Nutzdatenblöcken besteht,
- wobei jeder Nutzdatenblock aus einem Startbit, einer festen Anzahl von Nutzbits und einem Stoppbit besteht,
- wobei die Zeitdauer des Stoppbits vom Empfänger (5) überwacht wird,
- wobei vom Empfänger (5) auf Übertragungsfehler erkannt wird, wenn die Zeitdauer des Stoppbits die Zeit zum Übertragen eines Bits überschreitet,
- wobei der Übertragungsfehler vom Empfänger (5) einer übergeordneten Einheit (2), z. B. einem Prozessor (2), gemeldet wird.

2. Nachrichtenübertragungsverfahren nach Anspruch 1, **dadurch gekennzeichnet,** daß dem Empfänger (5) die Datenübertragungsrate vorbekannt ist.

3. Nachrichtenübertragungsverfahren nach Anspruch 1, **dadurch gekennzeichnet,** daß die übergeordnete Einheit (2) dem Empfänger (5) zunächst die Datenübertragungsrate vorgibt, mit dieser Datenübertragungsrate empfangene Nachrichten auf Fehler überprüft und beim Auftreten von Fehlern die Datenübertragungsrate solange ändert, bis in den mit der geänderten Datenübertragungsrate empfangenen Nachrichten keine Fehler mehr auftreten.

4. Nachrichtenübertragungsverfahren nach einem der obigen Ansprüche, **dadurch gekennzeichnet,** daß beim Erkennen eines Übertragungsfehlers eine Nachrichtenwiederholungsaufforderung an den Sender (5') übermittelt wird.

5. Nachrichtenübertragungsverfahren nach einem der obigen Ansprüche, **dadurch gekennzeichnet,** daß beim Erkennen eines Übertragungsfehlers die empfangene Nachricht von der übergeordneten Einheit (2) ignoriert wird.

6. Empfänger (5), vorzugsweise kombinierter Sendeempfänger (5), zur Durchführung des Verfahrens nach einem der obigen Ansprüche, **dadurch gekennzeichnet,** daß er Vergleichsmittel (11) zum Vergleichen einer für die Zeitdauer des Stoppbits charakteristischen Ist-Taktzahl mit einer für die Solldauer des Stoppbits charakteristischen Soll-Taktzahl und Meldemittel (24) zum Melden des Überschreitens einer maximal zulässigen Abweichung der Ist-Taktzahl von der Soll-Taktzahl an eine übergeordnete Einheit (2), z. B. einen Prozessor (2), aufweist.

7. Empfänger nach Anspruch 6, **dadurch gekennzeichnet,** daß die Vergleichsmittel (11) abschaltbar sind.

8. Empfänger nach Anspruch 6 oder 7, **dadurch gekennzeichnet,** daß er in einen anwendungsspezifischen Baustein (5) integriert ist.
